# EUROPÄISCHE PATENTSCHRIFT

(11) **EP 2 041 184 B1**
(45) Veröffentlichungstag und Bekanntmachung des Hinweises auf die Patenterteilung: **09.12.2009**
(21) Anmeldenummer: 07725840.8
(22) Anmeldetag: 05.06.2007
(51) Int. Cl.: C08F 2/00, C08F 2/20, C08F 2/24, C08F 18/04

(54) **VERFAHREN ZUR HERSTELLUNG WÄSSRIGER VINYLESTER-DISPERSIONEN**
METHOD FOR PRODUCING AQUEOUS VINYL ESTER DISPERSIONS
PROCÉDÉ DE FABRICATION DE DISPERSIONS AQUEUSES D'ESTERS VINYLIQUES

(30) Priorität: 03.07.2006 DE 102006030557
(43) Veröffentlichungstag der Anmeldung: 01.04.2009
(73) Patentinhaber: Celanese Emulsions GmbH, 61476 Kronberg/Ts. (DE)
(72) Erfinder: JAKOB, Martin, 65779 Kelkheim (DE); MOMPER, Bernhard, 35781 Weilberg (DE); JÖNNSON, Jan-Erik, 22653 Lund (SE); HANSSON, Anders, 28437 Perstorp (SE)
(74) Vertreter: Ackermann, Joachim
(86) Internationale Anmeldenummer: PCT/EP2007/004972
(87) Internationale Veröffentlichungsnummer: WO 2008/003379

(56) Entgegenhaltungen:
- EP-A1- 1 174 445
- WO-A-02/074856

## Beschreibung

Die vorliegende Erfindung betrifft ein verbessertes Verfahren zur Herstellung wässriger Vinylester-Dispersionen, insbesondere solcher auf der Basis von Vinylester-Copolymerisaten.

Verfahren zur radikalischen Polymerisation sind seit langem bekannt.

Neben der Polymerisation in Lösung oder in der Masse werden solche Reaktion häufig in Emulsion durchgeführt. Die Polymerisationsverfahren sollen hohe Raum-Zeit-Ausbeuten und gleichzeitg möglichst hohe Sicherheit bei der Reaktionsführung gewährleisten. Ferner sollen dabei Reaktionsprodukte entstehen, die sich möglichst gut reproduzieren lassen und die ein gewünschtes mittleres Molekulargewicht sowie eine gewünschte Molekulargewichtsverteilung aufweisen. Bei der radikalischen Emulsionspolymerisation läßt sich der Prozess über eine Vielzahl von Verfahrensparametern steuern. Bespiele dafür sind Polymerisationstemperatur, Dosiergeschwindigkeit der Reaktanten, Abfuhr der Reaktionswärme, Art und Menge von Bestandteilen des Reaktionssystems oder Aufbau des Polymerisationsreaktors. Entsprechend zahlreich sind die Vorschläge in der Literatur zur Durchführung dieser Polymerisationsreaktionen.

In Dechema Monographs, Bd. 137, S. 653-9 (2001) beschreiben P.H.H. Araüjo et al. den Einfluß von Verfahrensparametern auf die Optimierung von Polymerisationsreaktionen von Vinylacetat-Emulsionen. Der Artikel betrifft die Optimierung von Batch-Reaktionen dieses Monomersystems. Als Prozessvariablen werden Temperaturprofile sowie die Zugabegeschwindigkeiten von Monomeren und Initatoren genannt und es wird auf den Einfluß der Wärmeabfuhrkapazität des Reaktors verwiesen. Als Resultat der Optimierung lassen sich deutlich verkürzte Zykluszeiten erzielen.

JP-A-07/082,304 beschreibt die Suspensionspolymerisation von Vinylchlorid in einem mit Rückflusskühler ausgestatteten Reaktor. Um die Polymerisationsdauer zu verkürzen wird dem Reaktionsgemisch vor Erreichen von 60 % des Gesamtumsatzes ein hoch aktiver und öllöslicher Initiator zugesetzt.

In der DE 44 42 577 A1 wird ein Verfahren zur Herstellung von Emulsionspolymerisaten beschrieben, bei dem zumindest anteilig hydrophobe Monomere eingesetzt werden. Das Verfahren wird in Rührreaktoren unter Auswahl einer bestimmten Zugabegeschwindigkeit der Monomeren durchgeführt. Die Polymerisation erfolgt unter reduzierten Druck und ein abdestillierendes Monomer/Wasser-Gemisch wird durch Kühlung kondensiert und in die Reaktionsmischung zurückgeführt. Die Abführung eines Teils oder der gesamten Reaktionswärme erfolgt bei diesem Verfahren durch Siedekühlung.

Aus der WO 2005/016,977 A1 ist ein Verfahren zur Herstellung wässriger Polymerdispersionen durch radikalisch initiierte Emulsionspolymerisation bekannt. Dieses umfaßt die einstufige Polymerisation von wenigstens einer ethylenisch ungesättigten Verbindung in Anwesenheit wenigstens eines Dispergiermittels sowie wenigstens eines wasserlöslichen und eines öllöslichen Radikalinitiators. Das Verfahres beginnt bei einer Startreaktionstemperatur, die im Verlaufe des Verfahrens auf eine Endreaktionstemperatur ansteigt. Das beschriebene einstufige Verfahren gestattet die Herstellung restmonomerenarmer wässriger Polymerdispersionen ohne den Einsatz zusätzlicher Reduktionsmittel.

In der EP 1 491 558 A1 wird ein Verfahren zur Kontrolle des Aufbaus eines Copolymerisats beschrieben, das sich von mindestens einem langsamer reagierenden und einem schneller reagierenden Comonomeren ableitet. Das Verfahren umfasst die Durchführung von Tests zur Bestimmung der Reaktionsgeschwindigkeiten der beiden Monomeren und die Durchführung der eigentlichen Copolymerisation, wobei die Zugabe des schneller reagierenden Monomeren unter Berücksichtung der durch die Testpolymerisation erhaltenen Daten gesteuert wird.

EP 0 486 262 A1 beschreibt ein Verfahren zur Herstellung von Copolymerdispersionen durch kontrollierte Zugabe der Reaktanten. Die Steuerung der Reaktion erfolgt durch Anpassung der Zugabegeschwindigkeit der Reaktanten und/oder der Polymerisationstemperatur, wobei die Regelung durch Beobachtung der freigesetzten Reaktionswärme und deren Abgleich mit der bekannten Energiebilanz des Reaktionssystems geschieht.

WO 2004/096,871 A1 beschreibt die Verbesserung eines Verfahrens zur Emulsionspolymerisation durch Einsatz eines Systems zweier Initiatoren. Der weniger stabile Initiator wird nach Start der Polymerisation in einer solchen Geschwindigkeit zudosiert, dass das System zu Beginn der Reaktion mit maximaler Kühlkapazität betrieben werden muß. Das Verfahren gestattet hohe Raum-Zeit-Ausbeuten ohne dass die Reaktion außer Kontrolle gerät.

Aus der WO 2004/113,392 A1 ist ein weiteres Verfahren zur radikalischen Polymerisation bekannt, bei dem ein Peroxid zum Einsatz kommt, das bei der Polymerisationstemperatur eine Halbwertszeit von bis zu einer Stunde aufweist. Der Initiator wird mit einer solchen Geschwindigkeit zudosiert, dass das System mit maximaler Kühlkapazität betrieben werden muß und die erzielte Reaktions-temperatur wird überwacht, und durch die Zugabegeschwindigkeit des Initiators auf einem vorgegebenen Wert gehalten. Das Verfahren gestattet Herstellung von Polymeren mit sehr gut reproduzierbaren K-Werten. Das Verfahren wird für die Polymerisation von Vinylchlorid und gegebenenfalls weiteren Comonomeren beschrieben.

Die WO 2005/000,916 A1 beschreibt ein Verfahren zur wässrigen Emulsionspolymerisation, bei dem eine Kombination von organischem Peroxid und einem Stabilisator dafür eingesetzt wird. Wenigstens ein Teil des organischen Peroxids wird der Reaktionsmischung bei Erreichen der Polymerisationstemperatur zugesetzt. Das Verfahren gestattet die Herstellung von Polymeren mit einheitlicherem Molekulargewicht.

Es ist ferner bekannt, dass die Herstellung von Vinylester-Homo- und -Copolymeren durch radikalische Emulsionspolymerisation im Batchverfahren, im Zulaufverfahren, im kombinierten Batch/Zulauf-Verfahren oder im kontinuierlichen Verfahren erfolgen kann.

Typischerweise wird im kombinierten Batch/Zulauf-Verfahren oder im Zulaufverfahren gearbeitet. Dabei wird üblicherweise ein geringer Teil der Monomeren, typischerweise 1 bis 15 Gew. %, zum Starten der Polymerisation vorgelegt. Die Dosierung der Monomere kann entweder zusammen oder in getrennten Zuläufen erfolgen. In bestimmten Ausführungsformen zur Einstellung spezifischer Partikelgrößen- und -verteilungen kann es vorteilhaft sein, eine Saatpolymerisation durchzuführen. Zulaufverfahren erlauben eine relativ hohe Verfahrenssicherheit im betrieblichen Maßstab und können daher meist problemlos in sehr großen Reaktoren durchgeführt werden. In unvorhergesehenen Fällen können durch Stoppen der Zuläufe kritische Reaktionszustände leicht vermieden werden. Am allgemeinen ist die minimale Dosierzeit limitiert durch die Kühlkapazität der verfügbaren Reaktormanteloberfläche. Da Produkte im Holz-, Papier- und Verpackungsklebstoffbereich im allgemeinen auch höhere Viskositäten aufweisen, ist die Kühlungseffizienz behindert. Bei der Ausführung von Zulaufverfahren hat das Reaktionsgemisch in der Regel eine niedrige stationäre Monomerkonzentration, die Kettenübertragungsreaktionen begünstigt. Aufgrunddessen sind die erreichbaren Molekulargewichte niedrig. Des weiteren werden bei diesen Verfahren Schutzkolloide durch Pfropfung hydrophobisiert und werden der wäßrigen Phase entzogen. In der Regel wirkt sich beides ungünstig auf die anwendungstechnischen Eigenschaften für den Einsatz als Papier- oder Holzklebstoff aus. Batchverfahren mit einer hohen Monomerkonzentration zu Beginn der Reaktion führen zu hohen Molekulargewichten, niedrigen Pfropfraten und führen zu anwendungstechnisch besseren Produkten. Allerdings sind im betrieblichen Maßstab zum Teil aufwändige Vorkehrungen gegen das Auftreten von Runaway-Reaktionen zu treffen. Polymerisationen in großen Reaktoren sind sicherheitstechnisch schwer zu beherrschen.

Ausgehend von diesem Stand der Technik war es Aufgabe der vorliegenden Erfindung, ein Verfahren zur Emulsionspolymerisation von Vinylestern mit hoher Verfahrenssicherheit bereitzustellen, das Emulsionspolymerisate mit hohen Molekulargewichten, ähnlich denjenigen von Batchpolymerisaten, erzeugt und darüberhinaus im Vergleich zu herkömmlichen Dosierverfahren vergrößerte Raum-Zeit-Ausbeuten (= Produktdurchsatz pro Volumeneinheit und pro Zeiteinheit) durch verkürzte Zykluszeiten aufweist.

Das erfindungsgemäße Verfahren weist mehrere Änderungen zum bislang angewendeten Polymerisationsverfahren auf. Bislang wurde die Reaktionswärme in einem konventionellen Polymerisationsreaktor für die Emulsionspolymerisation hauptsächlich durch Mantelkühlung abgeführt und während des Polymerisationsverfahrens wurde eine relativ niedrige Monomerkonzentration im Reaktor aufrechterhalten.

Überraschenderweise wurde gefunden, dass durch Änderungen mehrerer Prozessparameter ein Verfahren erhalten wird, das weitaus ökonomischer durchzuführen ist und dass sich dennoch sicher betreiben lässt.

Gegenstand der vorliegenden Erfindung ist ein Verfahren zur Herstellung einer wässrigen Vinylester-Dispersion durch radikalische Emulsionspolymerisation umfassend folgende Maßnahmen:
i) Vorlage oder Herstellung einer wässrigen Emulsion, enthaltend bis zu 30 % der Gesamtmenge der zu polymerisierenden Monomeren, welche eine Vinylester einer Carbonsäure und gegebenenfalls eitere damit copolymerisierbare ethylenisch ungesättigte Monomere enthält sowie eine Teilmenge oder die im Verfahren eingesetzte Gesamtmenge mindestens eines Emulgators und/oder eine Teilmenge oder die im Verfahren eingesetzte Gesamtmenge mindestens eines Schutzkolloids, als Polymerisationsgemisch in einem mit Temperiervorrichtungen, vorzugsweise mit temperierbarem Mantel, sowie mit Rückflußkühler und Rührvorrichtung ausgestattetem Reaktor,
ii) Verwendung einer die Polymerisation retardierenden Verbindung, welche dem Polymerisationsgemisch vor oder nach Polymerisationsstart zugesetzt wird,
iii) Initiierung der Polymerisation durch Zugabe eines Polymerisationsinitiators zum Starten und Einstellen einer zum Initiatorzerfall geeigneten Reaktortemperatur,
iv) Durchführung der Polymerisationsreaktion in einer ersten Phase, bei der das Reaktionsgemisch eine Temperatur aufweist, welche der Siedetemperatur des Azeotrops des Vinylesters mit Wasser oder niedriger entspricht und worin die Konzentration des Vinylestermonomeren im Polymerisationsgemisch am Ende der ersten Phase um nicht mehr als 50 % abgereichert worden ist, im Vergleich zur Konzentration des Vinylestermonomeren im Polymerisationsgemisch zu Beginn der ersten Phase,
v) Durchführung der Polymerisationsreaktion in einer zweiten Phase, welche sich unmittelbar an die erste Phase anschließt, wobei sich die Reaktionstemperatur oberhalb der Siedetemperatur des Azeotrops des Vinylesters mit Wasser befindet und die Konzentration an Vinylestermonomeren im Polymerisationsgemisch in dieser Phase im Vergleich zur Konzentration am Endpunkt der ersten Phase abgereichert wird und die Polymerisationswärme über Siedekühlung am Rückfluß abgeführt wird oder eine kombinierte Kühlung durch Wärmeabfuhr über Temperiervorrichtung, vorzugsweise über den temperierbaren Mantel, und Siedekühlung erfolgt,
vi) Zudosierung des oder der restlichen Monomeren beginnend innerhalb der ersten Phase der Polymerisation oder spätestens zu Beginn der zweiten Phase, und endend mit Beendigung der zweiten Phase,
vii) Zudosierung eines kontinuierlichen oder intermittierenden Initiatorzulaufs während der Polymerisation, wobei der Zulauf über beide Phasen oder jeweils während einer Phase, vorzugsweise partiell in der ersten Phase und der zweiten Phase erfolgt, und
viii) Abreichern der retardierenden Verbindung während der ersten Phase.

In Schritt i) des erfindungsgemäßen Verfahrens wird eine wässrige Emulsion enthaltend mindestens einen Teil des zu polymerisierenden Monomers oder der Monomeren und mindestens einen Teil mindestens eines Emulgators und/oder mindestens eines Schutzkolloids vorgelegt. Dieses Polymerisationsgemisch enthält einen Teil der gesamten zu polymerisierenden Monomeren. Dieses Polymerisationsgemisch enthält einen Teil des Stabilisierungssystems, es kann aber auch die gesamte Menge an Emulgator und/oder an Schutzkolloid enthalten. Diese letztere Ausführungsform ist bevorzugt.

Vorzugsweise werden zu Beginn der Polymerisation 10 bis 30 Gew. % der Gesamtmasse an zu polymerisierenden Monomeren vorgelegt.

Vorzugsweise werden zu Beginn der Polymerisation die Gesamtmasse an Emulgator und/oder Schutzkolloid vorgelegt. Es kann jedoch auch ein zur Stabilisierung ausreichender Teil der Gesamtmenge des Stabilisierungssystems vorgelegt, und der Rest kontinuierlich oder portionsweise während der Reaktion zugesetzt werden. Dieses kann zusammen mit dem Zulauf der Monomeren oder getrennt davon erfolgen.

Der Reaktor ist mit Temperiervorrichtungen ausgestattet. Dabei handelt es sich bevorzugt um einen temperierbarem Mantel. Es kann sich aber auch um andere technische Kühlvorrichtungen handeln, beispielsweise um innenliegende Siedeschlangen oder um Kombinationen dieser Kühlvorrichtungen. Außerdem ist der Reaktor mit mindestens einem Rückflußkühler ausgestattet. Der Reaktor besitzt darüberhinaus auch eine Rührvorrichtung, die es neben der erforderlichen Durchmischung des Reaktionsgemisches gestattet, einen Rückfluß aus der Siedekühlung im Reaktionsgemisch zu emulgieren, ohne dass sich nenneswerte Mengen Monomer während der Reaktion im Reaktor separieren.

Im Schritt ii) wird eine die Polymerisation retardierende Verbindung verwendet.
Diese kann im Polymerisationsgemisch bereits vorliegen, oder sie wird diesem vor oder nach Polymerisationsstart zugesetzt. Die Natur dieser Verbindungen wird nachstehend näher erläutert.

Unter einer retardierenden Verbindung wird hier eine Verbindung gemäß der Definition aus Hans-Georg Elias: Makromoleküle, Hüthig & Wepf Verlag Basel, 5. Auflage, Band 1, S. 481 verstanden. Eine retardierende Verbindung oder Verzögerer löst im Gegensatz zu echten Inhibitoren keine Induktionsperiode aus, in der keinerlei Umsatz stattfindet, sondern die Polymerisation setzt sofort ein, allerdings mit geringerer Geschwindigkeit. Zu dieser Stoffgruppe gehören beispielsweise Nitroaromaten, Furane, Vinylaromaten, Allylverbindungen und insbesondere Verbindungen, die als Comonomere bei der Polymerisation von Vinylestern Verwendung finden, jedoch nach Anlagerung an deren Makroradikale reaktionsträgere Radikale bilden und die Reaktionsgeschwindigkeit verringern. Hierzu gehören ungesättigte Dicarbonsäuren, wie z.B. Maleinsäure oder Fumarsäure, deren Anhydride, Salze, Halbsalze, sowie deren Vollester oder Halbester mit C₁-C₁₂-Alkanolen oder Salze dieser Halbester. Beispielhaft genannt seien Dibutylmaleinat, Monobutylmaleinat, Maleinsäureanhydrid oder Maleinsäure bzw. deren Salze.

Im Verfahrensschritt iii) wird die Polymerisation durch Zugabe eines Polymerisations-initiators zum Starten und Einstellen einer zum Initiatorzerfall geeigneten Reaktortemperatur gestartet. Hierzu können entweder Redoxinitiatorsysteme oder thermische Systeme verwendet werden. Zur Einstellung eines hohen Molekulargewichtes sind jedoch rein thermisch zerfallende Systeme bevorzugt. Die Auswahl des thermischen Initiators richtet sich nach dessen Halbwertszeit. Diese Angaben sind in der einschlägigen Fachliteratur wie bei J. C. Masson in Polymer Handbook von J. Brandrup und E. H. Immergut, 3. Aufl., S. II/1 bis II/79, John Wiley & Sons, New York, oder Broschüren bzw. technischen Merkblättern der Hersteller vorhanden. Der Zerfall des Initiators oder der verwendeten Initiatorkombination muß bei der gewählten Reaktionstemperatur, die nach oben durch die Siedetemperatur des Azeotrops des (der) Vinylester mit Wasser begrenzt wird, ausreichend sein, um eine Emulsionspolymerisation zu initiieren. Im Falle der Polymerisation von Vinylacetat als Vinylester und der Lage des Azeotrops von 66 °C bei Normaldruck muß ein ausreichender Zerfall zu Beginn der ersten Polymerisationsphase im Bereich zwischen vorzugsweise 62 °C und 66 °C vorhanden sein. Die Initiatoren können entweder wasserlöslich oder öllöslich (monomerlöslich) sein. Geeignete wasserlösliche Verbindungen sind Salze der Peroxodischwefelsäure wie Ammonium- oder Natriumperoxodisulfat. Es können auch öllösliche Initiatoren verwendet werden oder Gemische der vorgenannnten Systeme. In einer bevorzugten Ausführungsform der Erfindung wird ein Gemisch aus wasser- und öllöslichen Initiatoren verwendet.

Bei den wasserlöslichen Radikalinitiatoren kann sich dabei beispielsweise sowohl um Peroxide als auch um Azoverbindungen handeln. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise die Mono- und Di-Natrium-, -Kalium- oder -Ammoniumsalze, oder organische Hydroperoxide, wie Alkylhydroperoxide, beispielsweise tert.-Butyl-, p-Mentyl- oder Cumylhydroperoxid eingesetzt werden. Als Azoverbindungen finden beispielsweise 2,2'-Azobis(amidinopropyl)-dihydro-chlorid (AIBA, entsprechend V-50 von Wako Chemicals) Verwendung.

Bevorzugt worden als wasserlösliche Radikalinitiatoren ein Mono- oder Di-Alkalimetall- oder Ammoniumsalz der Peroxodischwefelsäure; beispielsweise Dikaliumperoxodisulfat, Dinatriumperoxodisulfat oder Diammoniumperoxodisulfat eingesetzt. Selbstverständlich ist es auch möglich, Gemische der vorgenannten wasserlöslichen Radikalinitiatoren einzusetzen.

Als öllösliche Radikalinitiatoren seien beispielhaft genannt Dialkyl- bzw. Diarylperoxide, wie Di-tert-amylperoxid, Dicumylperoxid, Bis(tert.-butylperoxiisopropyl)benzol, 2,5-Bis(tert.-butylperoxi)-2,5-dimethylhexan, tert-Butylcumolperoxid, 2,5-Bis(tert.-butylperoxi)-2,5-dimethyl-3-hexen, 1,1-Bis(tert.-butylperoxi)-3,3,5-trimethylcyclohexan, 1,1-Bis(tert.-butylperoxi)cyclohexan, 2,2-Bis(tert.-butylperoxi)butan oder Di-tert.-butylperoxid, aliphatische und aromatische Peroxiester, wie Cumylperoxineodecanoat, 2,4,4-Trimethylpentyl-2-peroxineodecanoat, tert.-Amylperoxineodecanoat, tert.-Butylperoxineodecanoat, tert.-Amylperoxipivalat, tert-Butylperoxipivalat, tert.-Amylperoxi-2-ethylhexanoat, tert-Butylperoxi-2-ethylhexanoat, tert.-Butylperoxidiethylacetat, 1,4-Bis(tert.-butylperoxi)cyclohexan, tert.-Butylperoxiisobutanoat, tert.-Butylperoxi-3,5,5-trimethylhexanoat, tert.-Butylperoxiacetat, tert.-Amylperoxibenzoat oder tert.-Butylperoxibenzoat, Dialkanoyl- bzw. Dibenzoylperoxide, wie Diisobutanoylperoxid, Bis(3,5,5-trimethylhexanoyl)peroxid, Dilauroylperoxid, Didecanoylperoxid, 2,5-Bis(2-ethylhexanoylperoxi)-2,5-dimethylhexan oder Dibenzoylperoxid, sowie Peroxicarbonate, wie Bis(4-tert.-butylcyclohexyl)-peroxidicarbonat, Bis-(2-etylhexyl)peroxidicarbonat, Di-tert.-butylperoxidicarbonat, Diacetylperoxidicarbonat, Dimyristylperoxidicarbonat, tert.-Butylperoxiisopropylcarbonat oder tert.-Butylperoxi-2-ethylhexylcarbonat sowie öllösliche Azoverbindungen, wie 2,2'-Azobis(isobutyronitril).

Als Polymerisationsinitiatoren können auch sogenannte Redoxinitiatoren verwendet werden, die aus mindestens einem organischen und/oder anorganischen Reduktionsmittel und mindestens einem Peroxid und/oder Hydroperoxid zusammengesetzt sind, wie z.B. tert.-Butyl Hydroperoxid mit Schwefelverbindungen, wie z.B. dem Natriumsalz der Hydroxymethansulfinsäure, Natriumsulfit, Natriumdisulfit, Natriumthiosulfat und Acetonbisulfitaddukt, oder Wasserstoffperoxid mit Ascorbinsäure. Auch können kombinierte Systeme verwendet werden, die eine geringe Menge einer im Polymerisationsmedium löslichen Metallverbindung enthalten, deren metallische Komponente in mehreren Wertigkeitsstufen auftreten kann, wie z.B. Ascorbinsäure/Eisensulfat / Wasserstoffperoxid, wobei an Stelle von Ascorbinsäure auch häufig das Natriumsalz der Hydroxymethansulfinsäure, Acetonbisulfitaddukt, Natriumsulfit, Natriumhydrogensulfit oder Natriumbisulfit und an Stelle von Wasserstoffperoxid organische Peroxide wie z.B. tert. Butylhydroperoxid oder Alkaliperoxodisulfate und/oder Ammoniumperoxodi-sulfat verwendet werden.

Redoxinitiatoren werden weniger bevorzugt eingesetzt.

Die Gesamtmenge an eingesetztem Radikalinitiator beträgt 0,01 bis 5 Gew..%, bevorzugt 0,05 bis 3 Gew.-% und besonders bevorzugt 0.05 bis Gew.-%, jeweils bezogen auf die Gesamtmonomerenmenge.

Vor Beginn der Polymerisation wird die Reaktortemperatur beispielsweise durch Erhöhung der Manteltemperatur so erhöht, dass sich das im Reaktor befindliche Polymerisationsgemisch auf dessen Siedetemperatur oder auf eine darunterliegende Temperatur, vorzugsweise eine bis zu 10°C, insbesondere eine bis zu 5 °C, darunter liegenden Temperatur erhitzt. Hat der Reaktorinhalt diesen Temperaturbereich erreicht, wird der Polymerisationsinitiator zugefügt und die Polymerisation wird gestartet. Der zum Starten verwendete Initiator oder das Initiatorgemisch kann aber auch schon im Reaktionsgemisch vorliegen, also beispielsweise im Schritt i) zugegeben worden sein. Die Zugabereihenfolge ist für das erfindungsgemäße Verfahren nicht kritisch.

Nach Anspringen der Reaktion wird die eigentliche Polymerisationsreaktion durchgeführt. Diese kann man in mindestens zwei Phasen einteilen. In einer ersten Phase (Schritt iv) weist das Reaktionsgemisch eine Temperatur auf, welche der Siedetemperatur des Azeotrops des Vinylesters bei dem vorherrschenden Außendruck mit Wasser oder niedriger entspricht. Während dieser ersten Phase wird die Abreicherung des Vinylestermonomeren im Polymerisationsgemisch durch die Wirkung der retardierenden Komponente behindert. Die Reaktion ist so zu führen, dass die Konzentration des Vinylestermonomeren am Ende der ersten Phase im Vergleich zur Konzentration des Vinylestermonomeren zu Beginn der ersten Phase um nicht mehr als 50 % abgereichert worden ist. Im Verlauf dieser ersten Phase beträgt die Konzentration des Vinylestermonomeren im Polymerisationsgemisch typischerweise mindestens 5 Gew. %, vorzugsweise >= 7,5 Gew. % und besonders bevorzugt >= 9 Gew. %, bezogen auf das Polymerisationsgemisch. Die Konzentration des Vinylestermonomeren im Polymerisationsgemisch bewegt sich im Verlauf der ersten Phase typischerweise im Bereich von 5 bis 40 Gew. %, insbesondere im Bereich von 7,5 bis 35 Gew. % und ganz besonders bevorzugt im Bereichvon 9 bis 30 Gew. %, bezogen auf das Polymerisationsgemisch. Die Reaktionsbedingungen sowie gegebenenfalls die Zugabe von Vinylestermonomeren sind also so zu wählen, dass in dieser Phase im Polymerisationsgemisch immer ein vergleichsweise hoher Anteil an unreagtertem Vinylestermonomer vorliegt.

Die Reaktionstemperatur erfolgt zweckmäßigerweise durch Einstellen der Manteltemperatur. Es hat sich als zweckmäßig erwiesen, in dieser Phase durch Kaskadenregelung eine Innentemperatur als Sollwert vorzugeben, und die Außentemperatur durch die Automatik einzuregeln.

Beim Einsatz von Vinylacetat als Vinylester bildet sich mit Wasser so ein Azeotrop, das unter Normaldruck bei 66°C siedet. Im Falle von Vinylacetat als Monomer wird in dieser ersten Phase der Polymerisation die Reaktion bei oder unter dieser Temperatur durchgeführt, beispielsweise im Bereich von 56 bis 66°C, vorzugsweise im Bereich von 59 bis 66 °C, insbesondere im Bereich von 62 bis 66 °C. Diese Temperaturangaben beziehen sich auf die Durchführung der Polymerisation bei Normaldruck.

Die bei der Polymerisation entstehende Reaktionswärme wird in dieser ersten Phase bei Arbeiten am Azeotrop-Siedepunkt über leichte Siedekühlung abgeführt, beim Arbeiten unter dem Siedepunkt erfolgt die Wärmeabfuhr beispielsweise über den Reaktormantel.

Die Präsenz der retardierenden Verbindung verhindert in der ersten Phase eine vorzeitige Abreicherung des Vinylestermonomeren und verhindert einen vorzeitigen Temperaturanstieg. Die so eingestellten Reaktionsbedingungen tragen maßgeblich zum Aufbau eines hohen Molekulargewichts durch lineare Polymerisation bei.

In dieser Phase der Polymerisation wird die retardierende Verbindung allmählich durch Verbrauch bzw. Einpolymerisation abgereichert, was zur Folge hat, daß die Reaktionsgeschwindigkeit im weiteren Verlauf der Reaktion zunimmt.

In der nächsten Phase der Polymerisation (Schritt v) ist die Reaktion **dadurch gekennzeichnet, daß** sich die Reaktionstemperatur oberhalb der Siedetemperatur des Vinylester/Wasser-Azeotrops befindet und die durch Beschleunigung der Reaktion schneller freiwerdende Reaktionswarme durch Siedekuhlung am Ruckfluß oder eine kombinierte Kühlung durch Wärmeabfuhr beispielsweise über Mantel und/oder andere Kühlvorrichtungen und Siedekühlung abgeführt wird. Der Reaktionsansatz besitzt zu Beginn dieser Phase noch immer eine hohe Konzentration an freiem Vinylester. Die Konzentration an Vinylestermonomeren im Polymerisationsgemisch der zweiten Phase wird im Vergleich zur Konzentration dieses Monomeren zum Endpunkt der ersten Phase abgereichert. Die Konzentration wird zunehmend geringer und die Monomer-Konzentration reicht schließlich nicht mehr zur Bildung eines Azeotrops aus. In dieser Phase nimmt die Innentemperatur kontinuierlich zu. Die Steuerung kann in dieser Phase durch Einstellung einer möglichst niedrigen fixierten Manteltemperatur erfolgen, die in der Praxis durch die verfügbare Kühlwassertemperatur begrenzt ist.

Die bei der Polymerisation entstehende Reaktionswärme wird in dieser Phase durch starke Siedekühlung abgeführt. Im Gegensatz zu Verfahren des Standes der Technik bei denen die Reaktionswärme durch Mantelkühlung abgeführt wurde, wird beim erfindungsgemäßen Verfahren das Wasser des Polymerisationsgemisches teilweise verdampft, im Rückflusskühler kondensiert und in das Polymerisationsgefäß zurückgeführt. Infolge der großen Verdampfungswärme des Monomeren ist diese Art der Kühlung sehr effizient. Das Versagen des Rückflusskühlers kann allerdings ein gewisses Risiko darstellen. Diesem kann durch entsprechende Dimensionierung der Kühlkapazität des Mantels begegnet werden.

Am Ende der zweiten Phase wird der Zulauf des oder der Monomeren eingestellt und die Konzentration an Vinylestermonomeren im Polymerisationsgemisch liegt zu diesem Zeitpunkt unter 10 Gew. %, vorzugsweise unter 5 % Gew. %, bezogen auf das Polymerisationsgemisch.

Die Reaktionstemperatur im Gesamtverfahren bewegt sich im allgemeinen bei Temperaturen im Bereich von 40 bis 120°C, vorzugsweise im Bereich von 50 bis 100°C und besonders bevorzugt im Bereich von 55 bis 95°C.

Die Dosierung des restlichen monomeren Vinylesters (Schritt vi) erfolgt vorzugsweise während beider Polymerisationsphasen. Es hat sich als vorteilhaft erwiesen, den Zulauf innerhalb der ersten Polymerisationsphase zu starten, was einer zu früheren Abreicherung des Monomeren im Ansatz in der ersten Phase entgegenwirkt. Es ist jedoch auch möglich, den Zulauf zu Beginn der zweiten Phase bei Anstieg der Innentemperatur zu starten. Die Dosierung kann linear oder in stufenweisen oder kontiniuerlichen Profilen mit unterschiedlichen Dosierraten erfolgen. Es hat sich in der Praxis in einer speziellen Ausgestaltungsform des Verfahrens als günstig erwiesen, zu Beginn eine niedrigere Zulaufgeschwindigkeit zu wählen und diese dann kontinuierlich zu steigern, wobei der Monomereintrag dann am höchsten ist, wenn die Reaktionsgeschwindigkeit auch hoch ist.

Während der Reaktion wird vorzugsweise auch weiterer Initiator und gegebenenfalls Emulgator und/oder Schutzkolloid zugeführt. Diese Zuführung erfolgt über beide Phasen oder jeweils während einer Phase, vorzugsweise partiell in der ersten Phase und in der zweiten Phase. Vorzugsweise wird der Zulauf des Initiators parallel mit dem Monomerzulauf vorgenommen. Auch hier kann die Dosierung linear oder in stufenweisen oder kontiniuerlichen Profilen mit unterschiedlichen Dosierraten erfolgen. Die Art des zugeführten Initiators ist vorzugsweise dieselbe, welche zum Polymerisationsstart verwendet wird. Es können jedoch auch andere Initiatoren mit unterschiedlichen Halbwertszeiten, beispielsweise solche mit kürzeren oder längeren Halbwertszeiten oder anderen Löslichkeiten verwendet werden.

Der Feststoffgehalt der erfindungsgemäß hergestellten Kunststoff-Dispersionen liegt typischerweise im Bereich von 20 bis 80 Gew.-%, bevorzugt im Bereich von 40 bis 70 Gew.-% und insbesondere im Bereich von 45 bis 60 Gew.-%. Unter dem Begriff Feststoffgehalt wird in dieser Beschreibung die Gesamtmasse an Polymerisat, bezogen auf die Gesamtmasse der Dispersion, verstanden.

Die Größe der Polymerteilchen in den erfindungsgemäß hergestellten Dispersionen kann in weiten Bereichen variieren. Typische Teilchendurchmesser bewegen sich im Bereich von 0,05 bis 5 µm, vorzugsweise 0,1 bis 2 µm.

Die erfindungsgemäß hergestellten Kunststoff-Dispersionen weisen typischerweise einen pH Wert auf, der im Bereich von 2 bis 9 und besonders bevorzugt im Bereich von 3 bis 7 liegt.

Bei den erfindungsgemäß hergestellten Polymerisat-Dispersionen handelt es sich um Vinylester-Homopolymerisate oder um Vinylester-Copolymerisate.

Die erfindungsgemäß eingesetzten Vinylester leiten sich von Carbonsäuren mit 1 bis 18 Kohlenstoffatomen ab. Es können alle dem Fachmann bekannten Monomere eingesetzt werden.

Bevorzugt sind Vinylester von Carbonsäuren mit 1 bis 8 Kohlenstoffatomen, wie zum Beispiel Vinylformiat, Vinylacetat, Vinylpropionat, Vinylisobutyrat, Vinylpivalat und Vinyl-2-ethylhexanoat; Vinylester von gesättigten, verzweigten Monocarbonsäuren mit 9, 10 oder 11 Kohlenstoffatomen im Säurerest (^{®}Versaticsäuren); Vinylester von längerkettigen, gesättigten und ungesättigten Fettsäuren, wie zum Beispiel Vinyllaurat und Vinylstearat; Vinylester der Benzoesäure oder der p-tert.-Butylbenzoesäure sowie Gemische derselben.

Besonders bevorzugt sind Vinylester von Carbonsäuren mit 1 bis 4 Kohlenstoffatomen, Gemische aus Vinylacetat und mindestens einer Versaticsäure sowie Gemische aus Vinylacetat und Vinyllaurat. Insbesondere bevorzugt ist Vinylacetat.

Beispiele für mit Vinylestern copolymerisierbare Monomere sind monoethylenisch ungesättigte, gegebenenfalls halogensubstituierte Kohlenwasserstoffe, die vorzugsweise zwei bis vier Kohlenstoffatome aufweisen. Beispiele dafür sind Ethen, Propen, 1-Buten, 2-Buten, Isobuten, Vinylchlorid und Vinylidenchlorid, wobei Ethen und Gemische aus Ethen und Vinylchlorid bevorzugt sind. Der Anteil an diesen Monomeren im Vinylester-Copolymerisat beträgt, bezogen auf die Gesamtmasse der zur Herstellung des Vinylester-Copolymerisats verwendeten Monomere, vorzugsweise weniger als 20 Gew.-%.

Bevorzugte Monomergemische aus den oben genannten Monomeren sind Vinylacetat/Vinylchlorid/Ethen, Vinylacetat/Vinyllaurat/Ethen, Vinylacetat/Vinyllaurat/- Ethen/Vinylchlorid, Vinylacetat/Versaticsäurevinylester/Ethen/Vinylchlorid, Versaticsäurevinylester/Ethen/Vinylchlorid, Vinylacetat/Versaticsäurevinylester/- Ethen und Vinylacetat/Ethen, wobei die Kombination Vinylacetat/Ethen besonders bevorzugt ist.

Weitere mit Vinylestern copolymerisierbare Monomere sind ethylenisch ungesättigte, ionische Monomere, beispielsweise Verbindungen, die mindestens eine Carbonsäure-, eine Sulfonsäure-, eine Phosphorsäure- oder eine Phosphonsäuregruppe in direkter Nachbarschaft zur Doppelbindungseinheit tragen oder aber über einen Spacer mit dieser verbunden sind. Als Beispiele seien genannt: α,β-ungesättigte C₃-C₈-Monocarbonsäuren, α,β-ungesättigte C₅-C₈-Dicarbonsäuren sowie deren Anhydride, und Halbester von α,β-ungesättigten C₄-C₈-Dicarbonsäuren.

Bevorzugt sind ungesättigte Monocarbonsäuren, wie z.B. Acrylsäure und Methacrylsäure sowie deren Anhydride; ungesättigte Dicarbonsäuren, wie z.B. Maleinsäure, Fumarsäure, Itaconsäure und Citraconsäure sowie deren Halbester mit C₁-C₁₂-Alkanolen wie Monomethylmaleinat und Mono-n-butylmaleinat. Weitere bevorzugte, ethylenisch ungesättigte, ionische Monomere sind ethylenisch ungesättigte Sulfonsäuren, wie z.B. Vinylsulfonsäure, 2-Acrylamido-2-methylpropan-sulfonsäure, 2-Acryloxy- und 2-Methacryloxyethansulfonsäure, 3-Acryloxy- und 3-Methacryloxypropansulfonsäure und Vinylbenzolsulfonsäure, sowie ethylenisch ungesättigte Phosphonsäuren, wie z.B. Vinylphosphonsäure.

Außerdem können neben den genannten Säuren auch deren Salze eingesetzt werden, vorzugsweise deren Alkalimetallsalze oder deren Ammoniumsalze und insbesondere deren Natdumsalze, wie beispielsweise die Natriumsalze der Vinylsulfonsäure und der 2-Acrylamidopropansulfonsäure.

Die genannten, ethylenisch ungesättigten, freien Säuren liegen in wässriger Lösung bei pH 11 überwiegend in Form ihrer konjugierten Basen in anionischer Form vor und lassen sich, wie die genannten Salze, als anionische Monomere bezeichnen.

Des Weiteren eignen sich als ethylenisch ungesättigte, ionische Monomere auch Monomere mit kationischer Funktionalität, wie beispielsweise auf quatemäre Ammoniumgruppen zurückgehende Monomere. Bevorzugt sind jedoch anionische Monomere.

Noch weitere mit Vinylestern copolymerisierbare Monomere sind ethylenisch ungesättigte, copolymerisierbare Siliciumorganische Verbindungen.

Beispiele dafür sind Monomere der allgemeinen Formel RSi(CH₃)₀₋₂(OR¹)₃₋₁, wobei R die Bedeutung CH₂=CR²-(CH₂)₀₋₁ oder CH₂=CR²-CO₂-(CH₂)₁₋₃ hat, R¹ ein unverzweigter oder verzweigter, gegebenenfalls substituierter Alkylrest mit 3 bis 12 C-Atomen ist, der gegebenenfalls durch eine Ethergruppe unterbrochen sein kann, und R² für H oder CH₃ steht.

Noch weitere mit Vinylestern copolymerisierbare Monomere sind ethylenisch ungesättigte, nichtionische Monomere. Darunter sind sowohl die Amide der im Zusammenhang mit den ethylenisch ungesättigten, ionischen Monomeren genannten Carbonsäuren, wie beispielsweise (Meth)acrylamid und Acrylamid, sowie wasserlösliche N-Vinyllactame, wie beispielsweise N-Vinylpyrrolidon, als auch solche Verbindungen, die als ethylenisch ungesättigte Verbindungen kovalent gebundene Polyethylenglykoleinheiten enthalten, wie beispielsweise Polyethylenglykolmono- oder diallylether oder die Ester ethylenisch ungesättigter Carbonsäuren mit Polyalkylenglykolen zu verstehen.

Noch weitere mit Vinylestern copolymerisierbare Monomere sind Ester ethylenisch ungesättigter C₃-C₈-Mono- und Dicarbonsäuren mit vorzugsweise C₁-C₁₂-und besonders bevorzugt C₁-C₈-Alkanolen oder C₅-C₈- Cycloalkanolen. Besonders bevorzugt sind die Ester der Acrylsäure, der Methacrylsäure, der Crotonsäure, der Maleinsäure, der Itaconsäure, der Citraconsäure und der Fumarsäure. Insbesondere bevorzugt sind die Ester der Acrylsäure und/oder der (Meth)acrylsäure, wie z.B. der (Meth)acryl-säuremethylester, der (Meth)acrylsäureethylester, der (Meth)acrylsäureiso-propylester, der (Meth)acrylsäure-n-butylester, der (Meth)acrylsäureisobutylester, der (Meth)acrylsäure-1-hexylester, der (Meth)acrylsäure-tert.-butylester, der (Meth)acrylsäure-2-ethylhexylester, sowie die Ester der Fumarsäure und der Maleinsäure, wie z.B. der Fumarsäuredimethylester, der Maleinsäuredimethylester, der Maleinsäuredi-n-butylester, der Maleinsäuredi-n-octylester und der Maleinsäuredi-2-ethylhexylester. Gegebenenfalls können die genannten Ester auch mit Epoxy- und/oder Hydroxylgruppen substituiert sein. Auch kommen als weitere ethylenisch ungesättigte Monomere Nitrile α,β-monoethylenisch ungesättigter C₃-C₈-Carbonsäuren, wie z.B. Acrylnitril und Methacrylnitril, in Frage. Auch können C₄-C₈-konjugierte Diene, wie z.B. 1,3-Butadien, Isopren und Chloropren als weitere ethylenisch ungesättigte Monomere eingesetzt werden.

Des Weiteren können als weitere, ethylenisch ungesättigte Monomere solche Verbindungen eingesetzt werden, die bekanntermaßen die Haftungseigenschaften verbessern und/oder als Vernetzer wirken. Zu den haftungsverbessernden Monomeren gehören sowohl Verbindungen, die eine an das Doppelbindungssystem kovalent gebundene Acetoacetoxy-Einheit aufweisen, als auch Verbindungen mit kovalent gebundenen Harnstoffgruppen. Zu den erstgenannten Verbindungen zählen insbesondere Acetoacetoxyethyl(meth)acrylat und Acetessigsäureallylester. Zu den harnstoffgruppenhaltigen Verbindungen gehören zum Beispiel N-Vinyl- und N-Allyl-Harnstoff sowie Derivate des Imidazolidin-2-ons, wie z.B. N-Vinyl- und N-Allyl-imidazolidin-2-on, N-Vinyloxyethylimidazolidin-2-on, N-(2-(Meth)acrylamidoethyl)imidazolidin-2-on, N-(2-(Meth)acryloxyethyl)-imidazolidin-2-on und N-(2- (Meth)acryloxy-acetamido-ethyl)imidazolidin-2-on, sowie weitere dem Fachmann bekannte Haftungsvermittler auf Basis von Harnstoff bzw. Imidazolidin-2-on. Zur Verbesserung der Haftung eignet sich auch Diacetonacrylamid in Kombination mit einer Nachgabe von Adipinsäuredihydrazid zur Dispersion. Die haftungsvermittelnden Monomere können gegebenenfalls in Mengen von 0,1 bis 10 Gew.-%, vorzugsweise von 0,5 bis 5 Gew.-%, bezogen auf die Gesamtmasse der in der jeweiligen Monomermischung verwendeten Monomere, eingesetzt werden.

Als vernetzende Monomere können sowohl bifunktionelle als auch polyfunktionelle Monomere eingesetzt werden. Beispiele hierfür sind Diallylphthalat, Diallylmaleinat, Triallylcyanurat, Tetraallyloxyethan, Divinylbenzol, Butandiol-1,4-di(meth)acrylat. Triethylenglkoldi(methy)acrylat, Divinyladipat, Allyl(meth)acrylat, Vinylcrotonat, Methylenbisacrylamid, Hexandioldiacrylat, Pentaerythroldiacrylat und Trimethylolpropantriacrylat. Die vernetzenden Monomere können gegebenenfalls in Mengen von 0,02 bis 5 Gew.-%, vorzugsweise von 0,02 bis 1 Gew.-%, bezogen auf die Gesamtmasse der in der jeweiligen Monomermischung verwendeten Monomere, eingesetzt werden.

In einer besonders bevorzugten Ausführungsform des erfindungsgemäßen Verfahrens werden Vinylester und Anhydride ethylenisch ungesättigter Carbonsäuren sowie ethylenisch ungesättige Carbonsäuren oder deren Salze als Monomere eingesetzt. Diese Anhydride wirken als retardierende Verbindungen bei der Emulsionspolymerisation; dadurch lässt sich die Erzeugung der Reaktionswärme steuern. Ein ganz bevorzugtes Monomer dieses Typs ist Maleinsäureanhydrid oder die freie Maleinsäure oder deren Halb- oder Vollsalze.

Im erfindungsgemäßen Verfahren kommen Emulgatoren und/oder Schutzkolloide zum Einsatz.

Die Gesamtmasse an Emulgatoren, bezogen auf die Gesamtmasse der eingesetzten Monomeren, beträgt 0,01 bis 5 Gew.-%, vorzugsweise 0,1 bis 4 Gew.-%, besonders bevorzugt 0,5 bis 2 Gew.-%.

Es können ionische und nichtionische Emulgatoren eingesetzt werden.

Zu den ionischen Emulgatoren zählen sowohl anionische als auch kationische Emulgatoren, wobei anionische Emulgatoren sowie Mischungen von anionischen Emulgatoren besonders bevorzugt sind.

Zu den anionischen Emulgatoren zählen Alkali- und Ammoniumsalze von Alkylsulfaten (Alkylrest: C₆ bis C₁₈), Alkylphosphonaten (Alkylrest: C₆ bis C₁₈), von Schwefelsäurehalbestern oder Phosphorsäuremono- und -diestern ethoxylierter Alkanole (EO-Grad: 2 bis 50, Alkylrest: C₆ bis C₂₂) und ethoxylierter Alkylphenole (EO-grad: 3 bis 50, Alkylrest: C₄ bis C₉), von Alkylsulfonsäuren (Alkylrest: C₁₂ bis C₁₈), von Alkylarylsulfonsäuren (Alkylrest: C₉ bis C₁₈), von Sulfobernsteinsäurehalbestern und Sulfobemsteinsäurediestern von Alkanolen (Alkylrest: C₆ bis C₂₂) und ethoxylierten Alkanolen (EO-Grad: 2 bis 50, Alkylrest: C₆ bis C₂₂), sowie nichtethoxylierter und ethoxylierter Alkylphenole (EO-grad: 3 bis 50, Alkylrest: C₄ bis C₉).

In der Regel werden die aufgeführten Emulgatoren als technische Gemische eingesetzt, wobei sich die Angaben zu Länge von Alkylrest und EO-Kette auf das jeweilige Maximum der in den Mischungen vorkommenden Verteilungen bezieht. Beispiele aus den genannten Emulgatorklassen sind ^{®}Texapon K12 (Natriumlaurylsulfat von Cognis), ^{®}Emulsogen EP (C₁₃-C₁₇ Alkylsulfonat von Clariant), ^{®}Maranil A 25 IS (Natrium-n-Alkyl-(C₁₀-C₁₃) benzolsulfonat von Cognis), ^{®}Genapol liquid ZRO (Natrium C₁₂/C₁₄-Alkylethersulfat mit 3 EO-Einheiten von Clariant), ^{®}Hostapal BVQ-4 (Natriumsalz eines Nonylphenolethersulfats mit 4 EO-Einheiten von Clariant), ^{®}Aerosol MA 80 (Natriumdihexylsulfosuccinat von Cyctec Industries), ^{®}Aerosol A-268 (Dinatriumisodecylsulfosuccinat von Cytec Industries), ^{®}Aerosol A-103 (Dinatriumsalz eines Halbesters der Sulfobernsteinsäure mit einem ethoxylierten Nonylphenol von Cytec Industries).

Weiterhin eignen sich Verbindungen der allgemeinen Formel 1, 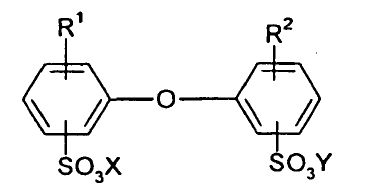 worin R¹ und R² Wasserstoff oder C₄-C₂₄-Alkyl, vorzugsweise C₆-C₁₆-Alkyl bedeuten und nicht gleichzeitig Wasserstoff sind, und X und Y Alkalimetallionen und/oder Ammoniumionen sind. Häufig werden auch im Falle dieser Emulgatoren technische Gemische verwendet, die einen Anteil von 50 bis 90 Gew.-% des monoalkylierten Produktes aufweisen, beispielsweise Dowfax^{®} 2A1 (R¹ = C₁₂-Alkyl; DOW Chemical). Die Verbindungen sind allgemein bekannt, z.B. aus der US-A-4,269 749, und im Handel erhältlich.

Darüber hinaus eignen sich als ionische Emulgatoren auch besonders dem Fachmann bekannten Gemini-Tenside, wie sie beispielsweise in dem Aufsatz "Gemini-Tenside" von F.M. Menger und J. S. Keiper (Angew. Chem. 2000, S. 1980-1996) und den darin zitierten Publikationen beschrieben sind.

Zu den kationischen Emulgatoren zählen beispielsweise Alkylammoniumacetate (Alkylrest: C₈ bis C₁₂), quartäre, ammoniumgruppenhaltige Verbindungen und Pyridiniumverbindungen.

Selbstverständlich ist bei der Wahl der ionischen Emutgatoren darauf zu achten, dass Unverträglichkeiten in der resultierenden Kunststoff-Dispersion, die bis zur Koagulation führen können, auszuschließen sind. Deshalb werden bevorzugt anionische Emulgatoren in Kombination mit anionischen Monomeren (M3) oder kationische Emulgatoren in Kombination mit kationischen Monomeren (M3) eingesetzt, wobei die Kombinationen aus anionischen Emulgatoren und anionischen Monomeren besonders bevorzugt sind.

Geeignete nichtionische Emulgatoren sind araliphatische und aliphatische nichtionische Emulgatoren, beispielsweise ethoxylierte Mono-, Di- und Trialkylphenole (EO-Grad: 3 bis 50, Alkylrest C₄ bis C₉), Ethoxylate langkettiger, verzweigter oder unverzweigter Alkohole (EO-Grad: 3 bis 50, Alkylrest: C₆ bis C₃₆), arylsubstituierte Phenolalkylenoxyether sowie Polyethylenoxid/Polypropylenoxid-Blockcopolymere.

Bevorzugt werden Ethoxylate langkettiger, verzweigter oder unverzweigter Alkanole (Alkylrest: C₆ bis C₂₂, mittlerer Ethoxylierungsgrad: 3 bis 50), und darunter besonders bevorzugt solche auf Basis von nativen Alkoholen, Guerbet-Alkoholen oder Oxoalkoholen mit einem linearen oder verzweigten C₁₂-C₁₈-Alkylrest und einem Ethoxylierungsgrad 10 von 8 bis 50, eingesetzt.

Weitere geeignete Emulgatoren finden sich in Houben-Weyl, Methoden der organischen Chemie, Band XIV/I, Makromolekulare Stoffe, Georg-Thierrie-Verlag, Stuttgart, 1961, S. 192-208).

Darüber hinaus können sowohl ionische wie auch nichtionische Emulgatoren verwendet werden, die als zusätzliche Funktionalität eine oder mehrere ungesättigte Doppelbindungseinheiten enthalten und als ethylenisch ungesättigte, ionische Monomere bzw. als ethylenisch ungesättigte, nichtionische Monomere während des Polymerisationsprozesses in die entstehenden Polymerketten eingebaut werden können. Diese als copolymerisierbare Emulgatoren ("Surfmers") bezeichnete Verbindungen sind dem Fachmann allgemein bekannt. Beispiele finden sich in einer Reihe von Veröffentlichungen (z.B.: Reactive surfactants in heterophase polymerization" von A. Guyot et al. in Acta Polym. 1999, S. 57-66) und sind im Handel erhältlich (z.B. ^{®}Emulsogen R 208 von Clariant oder Trem LF 40 von Cognis).

Neben oder anstelle von ionischen stabilisierenden Komponenten werden im erfindungsgemäßen Verfahren Schutzkolloide eingesetzt.

Darunter sind vorzugsweise Polyvinylalkohole, Stärke- und Cellulosederivate sowie Poly-vinylpyrrolidon zu verstehen.

Besonders bevorzugt werden Polyvinylalkohole eingesetzt.

In einer bevorzugten Ausführungsform des erfindungsgemäßen Verfahrens erfolgt die Emulsionspolymerisation in Gegenwart von Schutzkolloiden, beispielsweise von Polyvinylalkoholen, Stärke- und Cellulosederivaten sowie Polyvinylpyrrolidon, wobei Polyvinylalkohole und Cellulosederivate, wie z.B. Hydroxyethylcellulosen, bevorzugt sind.

Eine ausführliche Beschreibung weiterer, geeigneter Schutzkolloide findet sich in Houben-Weyl, Methoden der organischen Chemie, Band XIV/I, Makromolekulare Stoffe, Georg Thieme Verlag, Stuttgart 1961, S. 411 bis 420.

Das Molekulargewicht der Vinylester-Copolymerisate kann durch Zugabe gering Mengen einer oder mehrerer das Molekulargewicht regelnder Substanzen eingestellt werden. Diese sogenannten Regler" werden im allgemeinen in einer Menge von bis zu 2 Gew.-%, bezogen auf die zu polymerisierenden Monomere, eingesetzt. Als "Regler" können alle dem Fachmann bekannten Substanzen eingesetzt werden.

Bevorzugt sind z.B. organische Thioverbindungen, Silane, Allylalkohole und Aldehyde.

Bevorzugt werden bei dem erfindungsgemäßen Verfahren allerdings keine Regler eingesetzt.

Neben der saatfreien Herstellungsweise kann zur Einstellung einer definierten Polymerteilchengröße die Emulsionspolymerisation auch nach dem Saatlatex-Verfahren oder in Gegenwart von in situ hergestellten Saatlatices erfolgen. Solche Verfahren sind bekannt und werden in einer Vielzahl von Patentanmeldungen (z.B. EP-A-0 040 419 und EP-A-0 567 812) und Publikationen ("Encyclopedia of Polymer Science and Technology", Vol. 5, John Wiley & Sons Inc., New York 1966, S. 847) ausführlich beschrieben.

Im Anschluss an die eigentliche Polymerisationsreaktion kann es wünschenswert und/oder erforderlich sein, die erfindungsgemäßen, wässrigen Kunststoff Dispersionen weitgehend frei von Geruchsträgern, wie z.B. Restmonomeren und anderen flüchtigen, organischen Bestandteilen zu gestalten. Dies kann in an sich bekannter Weise beispielsweise physikalisch durch destillative Entfernung (insbesondere über Wasserdampfdestillation) oder durch Abstreifen mit einem inerten Gas erreicht werden. Ferner kann die Absenkung der Restmonomere auch chemisch durch radikalische Nachpolymerisation, insbesondere durch Einwirkung von Redoxinitiatorsystemen, wie sie z.B. in der DE-A-44 35 423 beschrieben sind, erfolgen. Bevorzugt ist eine Nachpolymerisation mit einem Redoxinitiatorsystem aus mindestens einem organischen Peroxid sowie einem organischen und/oder anorganischen Sulfit. Besonders bevorzugt ist eine Kombination aus physikalischen und chemischen Methoden, wobei nach einer Absenkung des Restmonomer Gehaltes durch chemische Nachpolymerisation die weitere Absenkung des Restmonomer-Gehaltes mittels physikalischer Methoden auf vorzugsweise < 1000 ppm, besonders bevorzugt <500 ppm, insbesondere <100 erfolgt.

Die erfindungsgemäß hergestellten wässrigen Kunststoff-Dispersionen auf Basis von Vinylester-Homo- oder -Copolymerisaten werden vorzugsweise im Klebstoffbereich als Papier-, Verpackungs-, oder Holzklebstoff eingesetzt, aber beispielsweise auch als Bindemittel in pigmenthaltigen, wässrigen Zubereitungen, die zur Beschichtung von Substraten dienen. Hierunter fallen beispielsweise kunstharzgebundene Putze, Fliesenkleber, Anstrichmittel, wie z.B. Dispersionsfarben, Dispersionslacke und Lasuren, Dichtmassen und Versiegelungsmassen, vorzugsweise für poröse Bauteile, aber auch Papierstreichmassen.

Durch das erfindungsgemäße Polymerisationsverfahren werden anwendungsechnisch hochwertige Produkte erhalten, die in einem Prozeß mit hoher Verfahrensicherheit und extrem kurzer Zykluszeit, bzw. hoher Raum-Zeitausbeute hergestellt werden können.

Die wässrigen Kunststoff-Dispersionen können aber auch direkt oder nach Zusatz rheologiemodifizierender Additive und/oder weiterer Komponenten als wässrige Zubereitungen zum Verkleben und Beschichten von Substraten eingesetzt werden. Solche wässrige Zubereitungen sind beispielsweise Grundierungen, Klarlacke oder auch Lebensmittelbeschichtungen, die Lebensmittel, wie z.B. Käse oder fleischhaltige Zubereitungen, vor schädlichen Umwelteinflüssen und/oder Austrocknung schützen.

Die Erfindung wird im folgenden anhand von Ausführungsbeispielen näher beschrieben, ohne dadurch jedoch in irgendeiner Weise beschränkt zu werden.

### Beispiel 1

Zur Versuchsdurchführung wurde ein Pilotanlagenreaktor mit 120 I Innenvolumen verwendet, der mit Rückflußkühler, Dosierpumpen und -vorlagen und mit elektrischen Steuerungsvorrichtungen, einem mit pneumatisch betriebenem Heizdampf/Wasser-Regelkreis ausgerüsteten Reaktormantel sowie einem wandgängigen, mit mehreren Querstreben versehenen Ankerrührer ausgerüster war (90 U/Min.). Dieser wurde mit einer Lösung von 3,36 kg Polyvinylalkohol vom Hydrolysegrad 88 mol- % und eine Viskosität der 4 %igen wäßrigen Lösung bei 20°C von 23 mPa*s in 31,6 kg entionisiertem Wasser beschickt. Der Lösung wurden 17,5g Natriumacetat als Puffer und 33,6 g Agitan 282 als Entschäumer zugesetzt.
Dem Gemisch wurde eine Lösung von 105 g Maleinsäureanhydrid in 105 g entionisiertem Wasser zugesetzt sowie 17,5 g Dibenzoylperoxid als öllöslicher Initiator. 7 kg Vinylacetat (20 % der Gesamtmenge) wurden unter Rühren einemulgiert und die Innentemperatur angehoben. Bei 55 °C wurde eine Lösung von 8,8 g Ammoniumperoxodisulfat in 89 g entionisiertem Wasser zum Reaktionsstart zugesetzt. Über Kaskadenregelung wurde die Innentemperatur auf 64 °C Sollwert gestellt und das Anspringen der Reaktion (Beginn Phase 1) durch die durch auftretende Exothermie bedingte Einregelung der Manteltemperatur kontrolliert. Befand sich die Manteltemperatur unter der Innentemperatur, wurden über 120 Min. 28 kg Vinylacetat und ein Zulauf von 4,4 g Ammoniumperoxodisulfat in 1 kg entionisiertem Wasser linear zudosiert. Nach Dosierung von ca. 45 % des Monomeren wurde die Exothermie stärker und die Phase 2 begann. Die Polymerisationswärme wurde unter nun unter Rückfluß abgeführt und die Innentemperatur stieg langsam an. Die Manteltemperatur wurde von Kaskadenregelung auf manuelle Steuerung umgestellt und allmählich auf 50 °C bis zum Dosierende abgesenkt.

Am Zulaufende betrug die Innentemperatur bei 72 °C, um dann noch innerhalb von 30 Min. auf 90 °C zu steigen. Bei 80 °C Manteltemperatur wurde noch 1 Stunde nachpolymerisiert und mit Zusätzen von Natrimetabisulfit und tert.-Butylhydroperoxid entmonomerisiert.

Es wurde eine koagulatfreie Dispersion mit folgenden Eigenschaften erhalten:
Viskosität (Brookfield RVT, Sp. 6/20 23 °C): 28.700 mPa*s
Feststoffgehalt: 52,3 %
Siebrückstand (180 µ Gewebe): 0,007 %
Rest-Vinylacetat: 300 ppm.
Mittlere Teilchengrößen (Massenmittel, bestimmt mit Malvern Mastersizer). 0,59 µm.

### Vergleichsbeispiel 1

Mit identischer Stoffzusammensetzung im reinen Batch-Verfahren hergestelltes Produkt (100 % Vinylacetat vorgelegt, Polymerisation zusätzlich mit Nitroverbindung retardiert).

### K-Wert-Bestimmung

Der K-Wert ist eine relative Viskositätszahl, die in Analogie zur DIN 53726 bestimmt wird. Die Bestimmung ist eine Relativ-Methode zur Ermittlung des Molekulargewichts eines Polymeren. Als Solvens diente Dimethylsulfoxid. 2 g der auf 50 % eingestellten Dispersion (d.h. 1 g Polymer) wurden genau mit der Analysenwaage in einem 100 ml Meßkolben eingewogen. Anschließend wurde mit DMSO auf 100 ml aufgefüllt und das Polymere gelöst. Als Vergleichslösemittel diente eine Lösung von 1 g Wasser auf 100 ml DMSO-Lösung . Die Bestimmung der relativen Viskosität als Basis für die Berechnungen erfolgte mittels eines Ostwald-Viskosimeters. Die Meßtemperatur lag bei 20 °C.

**Tabelle 1**

| Produkt | K-Wert |
|---|---|
| Beispiel 1 | 110 |
| Vergleichsbeispiel 1 (Batch) | 112 |
| Typische Werte für Dosierverfahren | 40-90 |

Diese Werte verdeutlichen, daß mit dem erfindungsgemäßen Verfahren Molekulargewichte erhalten werden, die denen von Batch-Verfahren vergleichbar sind.

### Beispiel 2

### Ermittlung von Monomerkonzentrationen während der Startphase der Polymerisation.

Beispiel 1 wurde wiederholt und dem Ansatz wurden bei laufender Reaktion mittels Probennehmer Proben entnommen, welche sofort mit Inhibitor zwecks Unterbindung einer Nachpolymerisation versetzt wurden. Die Proben wurden verdünnt und die Konzentration an Vinylacetat durch Headspace-Gaschromatographie ermittelt. Die Werte verdeutlichen die gezielte Akkumulation von Monomeren in der ersten Hälfte der Polymerisation. Diese Werte sind ausreichend, um hohe Molekularwichte zu erzielen, reichen jedoch in keiner Phase aus, um kritische Auslegungsdrucke kommerzieller Polymerisationsreaktoren nach einer Runaway-Reaktion zu überschreiten.

**Tabelle 2**

| Polymerisationsphase | Konzentration Vinylacetat (%) |
|---|---|
| Reaktionsbeginn (Phase 1) | 17 |
| Dosierbeginn (Phase 1) | 10 |
| Nach 25 % Zulauf (Phase 1) | 19 |
| Nach 50 % Zulauf (Beginn Phase 2) | 19 |

### Beispiel 3

Zu 100 Gewichtsteilen der Dispersion aus Beispiel 1 wurden 2 Gewichtsteile Butyldiglykolacetat als Filmbildehilfsmittel zugegeben und auf diese Weise ein gebrauchsfertiger Holzklebstoff erhalten. Der Feststoffgehalt betrug 53,3 %, Die Viskosität 33.600 mPas nach Brookfield RVT. Die Minimale Filmbildetemperatur lag bei 3 °C.

### Vergleichsbeispiel 2

Mowilith^{®} DLR, Handelsware der Celanese Emulsions GmbH, ein in einem konventionellen Dosierverfahren hergestellter, Filmbildehilfsmittel enthaltender Holzklebstoff mit einer Minimalen Filmbildetemperatur von 2 °C, einer Viskosität von 15.550 mPa*s und einem Feststoffgehalt von 49,7 %.

Überprüfung der Wärmestandfestigkeit der Holzklebstoffe (Wood Adhesive Temperature Test, WATT 91). Die WATT 91 gibt als Maß für die Wärmebeständigkeit eines Klebstoffs die Bruchlast Zugscherfestigkeit bei 80 °C in N/mm² an.

Die Herstellung der Prüfkörper erfolgte nach der Vorgehensweise der DIN EN 205. Die Verleimung und Prüfung wurde unter Berücksichtigung folgender Kenndaten durchgeführt:

| | |
|---|---|
| Leimauftrag: | 150 ± 20 g/m² beidseitiger Auftrag |
| Offene Wartezeit: | 3 Minuten |
| Geschlossene Wartezeit: | 3 Minuten |
| Preßzeit: | 2 Stunden |
| Preßdruck: | 0,7 ± 0,1 N/mm² |
| Anzahl Prüfkörper | 20 |
| pro Prüffolge: | |
| Prüfung nach | 7 Tage Normalklima^{*)} |
| Lagerungsfolge: | 1 h Wärmeschrank 80 °C |
| Prüftemperatur: | 23 °C ± 2 °C |
| Vorschubgeschwindigkeit: | 50 mm/Min. |

| | |
|---|---|
| ^{*)} 23 ± 2 °C und 50 ± 5 % relative Luftfeuchte | |

**Tabelle 3:**

| Probe | WATT 91 / N/mm² |
|---|---|
| Beispiel 3 | 6,5 |
| Vergleichsbeispiel 2 | 4,0 |

Diese Werte verdeutlichen den Effekt des Molekulargewichts, der dem im erfindungsgemäßen Verfahren hergestellten Produkt eine höhere Wärmebeständigkeit des Klebfilms verleiht.

## Patentansprüche

1. Verfahren zur Herstellung einer wässrigen Vinylester-Dispersion durch radikalische Emulsionspolymerisation umfassend folgende Maßnahmen:
i) Vorlage oder Herstellung einer wässrigen Emulsion, enthaltend bis zu 30 % der Gesamtmenge der zu polymerisierenden Monomeren, welche einen Vinylester einer Carbonsäure und gegebenenfalls weitere damit copolymerisierbare ethylenisch ungesättigte Monomere enthält sowie eine Teilmenge oder die im Verfahren eingesetzte Gesamtmenge mindestens eines Emulgators und/oder eine Teilmenge oder die im Verfahren eingesetzte Gesamtmenge mindestens eines Schutzkolloids, als Polymerisationsgemisch in einem mit Temperiervorrichtungen sowie mit Rückflußkühler und Rührvorrichtung ausgestattetem Reaktor,
ii) Verwendung einer die Polymerisation retardierenden Verbindung, welche dem Polymerisationsgemisch vor oder nach Polymerisationsstart zugesetzt wird,
iii) Initiierung der Polymerisation durch Zugabe eines Polymerisationsinitiators zum Starten und Einstellen einer zum Initiatorzerfall geeigneten Reaktortemperatur,
iv) Durchführung der Polymerisationsreaktion in einer ersten Phase, bei der das Reaktionsgemisch eine Temperatur aufweist, welche der Siedetemperatur des Azeotrops des Vinylesters mit Wasser oder niedriger entspricht und worin die Konzentration des Vinylestermonomeren im Polymerisationsgemisch am Ende der ersten Phase um nicht mehr als 50 % abgereichert worden ist, im Vergleich zur Konzentration des Vinylestermonomeren im Polymerisationsgemisch zu Beginn der ersten Phase,
v) Durchführung der Polymerisationsreaktion in einer zweiten Phase, welche sich unmittelbar an die erste Phase anschließt, wobei sich die Reaktionstemperatur oberhalb der Siedetemperatur des Azeotrops des Vinylesters mit Wasser befindet und die Konzentration an Vinylestermonomeren im Polymerisationsgemisch in dieser Phase im Vergleich zur Konzentration am Endpunkt der ersten Phase abgereichert wird und die Polymerisationswärme über Siedekühlung am Rückfluß abgeführt wird oder eine kombinierte Kühlung durch Wärmeabfuhr über Temperiervorrichtung und Siedekühlung erfolgt,
-vi) Zudosierung des oder der restlichen Monomeren beginnend innerhalb der ersten Phase der Polymerisation oder spätestens zu Beginn der zweiten Phase, und endend mit Beendigung der zweiten Phase,
vii) Zudosierung eines kontinuierlichen oder intermittierenden Initiatorzulaufs während der Polymerisation, wobei der Zulauf über beide Phasen oder jeweils während einer Phase erfolgt, und
viii) Abreichern der retardierenden Verbindung während der ersten Phase.

2. Verfahren nach Anspruch 1, **dadurch gekennzeichnet, dass** in Schritt i) 10 bis 30 Gew. % der Gesamtmasse an zu polymerisierenden Monomeren vorgelegt werden.

3. Verfahren nach einem der Ansprüche 1 bis 2, **dadurch gekennzeichnet, dass** in Schritt i) die Gesamtmasse an Emulgator und/oder Schutzkolloid vorgelegt werden.

4. Verfahren nach einem der Ansprüche 1 bis 3, **dadurch gekennzeichnet, dass** während der Dauer der ersten Phase die Konzentration des Vinylestermonomeren im Polymerisationsgemisch >= 7,5 Gew. % und besonders bevorzugt >= 9 Gew. % beträgt, und dass beim Ende der zweiten Phase die Konzentration des Vinylestermonomeren im Polymerisationsgemisch < 5 Gew. % beträgt.

5. Verfahren nach einem der Ansprüche 1 bis 4, **dadurch gekennzeichnet, dass** als Polymerisationsinitiatoren thermisch zerfallende wasserlösliche und/oder öllösliche Polymerisationsinitiatoren, vorzugsweise ein Gemisch aus thermisch zerfallenden wasser- und öllöslichen Polymerisationsinitiatoren eingesetzt wird.

6. Verfahren nach einem der Ansprüche 1 bis 5, **dadurch gekennzeichnet, dass** die die Polymerisation retardierende Verbindung ausgewählt wird aus der Gruppe der Nitroaromaten, Furane, Vinylaromaten, Allylverbindungen, ungesättigten Dicarbonsäuren, sowie deren Anhydriden, Salzen, Halbsalzen, Vollestern oder Halbestern mit C₁-C₁₂-Alkanolen oder der Salze dieser Halbester.

7. Verfahren nach Anspruch 6, **dadurch gekennzeichnet, dass** die die Polymerisation retardierende Verbindung ausgewählt wird aus der Gruppe der Maleinsäure, Fumarsäure, des Dibutylmaleinats, Monobutylmaleinats, Maleinsäureanhydrids oder deren Anhydriden oder Salzen oder Halbsalzen.

8. Verfahren nach einem der Ansprüche 1 bis 7, **dadurch gekennzeichnet, dass** als Vinylester einer Carbonsäure Vinylester von Carbonsäuren mit 1 bis 18 Kohlenstoffatomen eingesetzt werden, insbesondere Vinylester von Carbonsäuren mit 1 bis 8 Kohlenstoffatomen, Vinylester von gesättigten, verzweigten Monocarbonsäuren mit 9, 10 oder 11 Kohlenstoffatomen im Säurerest, Vinylester von längerkettigen, gesättigten und ungesättigten Fettsäuren, und/oder Vinylester der Benzoesäure oder der p-tert.-Butylbenzoesäure.

9. Verfahren nach Anspruch 8, **dadurch gekennzeichnet, dass** als Vinylester einer Carbonsäure Vinylacetat eingesetzt wird.

10. Verfahren nach einem der Ansprüche 1 bis 9, **dadurch gekennzeichnet, dass** als weitere mit dem Vinylester einer Carbonsäure polymerisierbare ethylenisch ungesättigte Monomere monoethylenisch ungesättigte und gegebenenfalls halogenierte Kohlenwasserstoffe mit 2 bis 4 Kohlenstoffatomen, vorzugsweise Ethylen, eingesetzt werden.

11. Verfahren nach einem der Ansprüche 1 bis 10, **dadurch gekennzeichnet, dass** als weitere mit dem Vinylester einer Carbonsäure polymerisierbare ethylenisch ungesättigte Monomere Anhydride ethylenisch ungesättigter Carbonsäuren eingesetzt werden.

12. Verfahren nach Anspruch 11 **dadurch gekennzeichnet, dass** als Anhydrid ethylenisch ungesättigter Carbonsäuren Maleinsäureanhydrid eingesetzt wird.

13. Verfahren nach Anspruch 9, **dadurch gekennzeichnet, dass** die erste Phase der Polymerisation bei Temperaturen im Bereich von 56 bis 66°C, vorzugsweise im Bereich von 59 bis 66 °C, insbesondere im Bereich von 62 bis 66 °C durchgeführt wird, wobei sich die Temperaturangaben auf Normaldruck beziehen.

14. Verfahren nach Anspruch 9, **dadurch gekennzeichnet, dass** die zweite Phase der Polymerisation bei Temperaturen im Bereich von 50 bis 95°C und bevorzugt im Bereich von 62 bis 90°C durchgeführt wird, wobei sich die Temperaturangaben auf Normaldruck beziehen.

15. Verfahren nach einem der Ansprüche 1 bis 14, **dadurch gekennzeichnet, dass** der Zulauf der weiteren Monomeren innerhalb der ersten Polymerisationsphase gestartet wird oder dass der Zulauf der weiteren Monomeren zu Beginn der zweiten Polymerisationphase bei Anstieg der Innentemperatur gestartet wird.

16. Verfahren nach Anspruch 15, **dadurch gekennzeichnet, dass** zu Beginn des Zulaufs der weiteren Monomeren eine niedrigere Zulaufgeschwindigkeit gewählt wird, die dann kontinuierlich gesteigert wird und die so eingestellt wird, dass der der Monomereintrag dann am höchsten ist, wenn die Reaktionsgeschwindigkeit ein Maximum erreicht.

17. Verfahren nach einem der Ansprüche 1 bis 16, **dadurch gekennzeichnet, dass** als Emulgatoren anionische und/oder nichtionishce Emulgatoren eingesetzt werden.

18. Verfahren nach einem der Ansprüche 1 bis 17, **dadurch gekennzeichnet, dass** als Schutzkolloid Polyvinylalkohol eingesetzt wird.

## Claims

1. A process for preparing an aqueous vinyl ester dispersion by free-radical emulsion polymerization, comprising the following measures:
i) initial charging or preparation of an aqueous emulsion comprising up to 30% of the total amount of the monomers to be polymerized which contains a vinyl ester of a carboxylic acid and optionally further ethylenically unsaturated monomers copolymerizable therewith, and a portion or the total amount used in the process of at least one emulsifier and/or a portion or the total amount used in the process of at least one protective colloid as a polymerization mixture in a reactor equipped with temperature control apparatus and with a reflux condenser and stirring apparatus,
ii) using a compound which retards the polymerization and is added to the polymerization mixture before or after the start of polymerization,
iii) initiating the polymerization by adding a polymerization initiator for initiation and establishing a reactor temperature suitable for initiator decomposition,
iv) performing the polymerization reaction in a first phase, in which the reaction mixture has a temperature which corresponds to the boiling point of the azeotrope of the vinyl ester with water or lower, and in which the concentration of the vinyl ester monomer in the polymerization mixture has been depleted by not more than 50% at the end of the first phase compared to the concentration of the vinyl ester monomer in the polymerization mixture at the start of the first phase,
v) performing the polymerization reaction in a second phase which immediately follows the first phase, the reaction temperature being above the boiling point of the azeotrope of the vinyl ester with water and the concentration of vinyl ester monomer in the polymerization mixture in this phase being depleted compared to the concentration at the end point of the first phase, and the heat of polymerization being removed by means of evaporative cooling at reflux, or combined cooling being effected through removal of heat by means of temperature control apparatus and evaporative cooling,
vi) metered addition of the residual monomer(s) beginning within the first phase of the polymerization or no later than at the start of the second phase, and ending with the end of the second phase,
vii) metered addition of a continuous or intermittent initiator feed during the polymerization, the feed being effected via both phases or in each case during one phase, and
viii) depleting the retarding compound during the first phase.

2. The process as claimed in claim 1, wherein from 10 to 30% by weight of the total mass of monomers to be polymerized is initially charged in step i).

3. The process as claimed in either of claims 1 and 2, wherein the total mass of emulsifier and/or protective colloid is initially charged in step i).

4. The process as claimed in any one of claims 1 to 3, wherein the concentration of the vinyl ester monomer in the polymerization mixture over the duration of the first phase is ≥ 7.5% by weight and more preferably ≥ 9% by weight, and wherein the concentration of the vinyl ester monomer in the polymerization mixture at the end of the second phase is < 5% by weight.

5. The process as claimed in any one of claims 1 to 4, wherein the polymerization initiators used are thermally decomposing water-soluble and/or oil-soluble polymerization initiators, preferably a mixture of thermally decomposing water- and oil-soluble polymerization initiators.

6. The process as claimed in any one of claims 1 to 5, wherein the compound which retards polymerization is selected from the group of the nitroaromatics, furans, vinylaromatics, allyl compounds, unsaturated dicarboxylic acids, and their anhydrides, salts, partial salts, full esters or partial esters with C₁-C₁₂-alkanois or the salts of these partial esters.

7. The process as claimed in claim 6, wherein the compound which retards polymerization is selected from the group of maleic acid, fumaric acid, of dibutyl maleate, monobutyl maleate, maleic anhydride, or the anhydrides or salts or partial salts thereof.

8. The process as claimed in any one of claims 1 to 7, wherein the vinyl esters of a carboxylic acid used are vinyl esters of carboxylic acids having from 1 to 18 carbon atoms, especially vinyl esters of carboxylic acids having from 1 to 8 carbon atoms, vinyl esters of saturated, branched monocarboxylic acids having 9, 10 or 11 carbon atoms in the acyl radical, vinyl esters of relatively long-chain saturated and unsaturated fatty acids, and/or vinyl esters of benzoic acid or of p-tert-butylbenzoic acid.

9. The process as claimed in claim 8, wherein the vinyl ester of a carboxylic acid used is vinyl acetate.

10. The process as claimed in any one of claims 1 to 9, wherein the further ethylenically unsaturated monomers polymerizable with the vinyl ester of a carboxylic acid used are monoethylenically unsaturated and optionally halogenated hydrocarbons having from 2 to 4 carbon atoms, preferably ethylene.

11. The process as claimed in any one of claims 1 to 10, wherein the further ethylenically unsaturated monomers polymerizable with the vinyl ester of a carboxylic acid are anhydrides of ethylenically unsaturated carboxylic acids.

12. The process as claimed in claim 11, wherein the anhydride of ethylenically unsaturated carboxylic acids used is maleic anhydride.

13. The process as claimed in claim 9, wherein the first phase of the polymerization is performed at temperatures in the range from 56 to 66°C, preferably in the range from 59 to 66°C, especially in the range from 62 to 66°C, the temperature data being based on standard pressure.

14. The process as claimed in claim 9, wherein the second phase of the polymerization is performed at temperatures in the range from 50 to 95°C and preferably in the range from 62 to 90°C, the temperature data being based on standard pressure.

15. The process as claimed in any one of claims 1 to 14, wherein the feed of the further monomers is started within the first polymerization phase, or wherein the feed of the further monomers is started at the start of the second polymerization phase when the internal temperature rises.

16. The process as claimed in claim 15, wherein a lower feed rate is selected at the start of the feed of the further monomers and is then increased continuously and adjusted such that the monomer input is at its highest when the reaction rate reaches a maximum.

17. The process as claimed in any one of claims 1 to 16, wherein the emulsifiers used are anionic and/or nonionic emulsifiers.

18. The process as claimed in any one of claims 1 to 17, wherein the protective colloid used is polyvinyl alcohol.

## Revendications

1. Procédé de préparation d'une dispersion aqueuse d'ester vinylique par polymérisation radicalaire en émulsion, comprenant les étapes suivantes :
i) Obtention ou préparation d'une émulsion aqueuse contenant jusqu'à 30 % de la quantité totale des monomères à polymériser, comprenant un ester vinylique d'un acide carboxylique et le cas échéant d'autres monomères éthyléniquement insaturés copolymérisables avec celui-ci, ainsi qu'une quantité partielle ou la quantité totale utilisée dans le procédé d'au moins un émulsifiant et/ou une quantité partielle ou la quantité totale utilisée dans le procédé d'au moins un colloïde protecteur sous la forme d'un mélange de polymérisation dans un réacteur équipé de dispositifs de régulation de température ainsi que d'un condenseur à reflux et d'un agitateur,
ii) Utilisation d'un composé retardateur de polymérisation qui est ajouté au mélange de polymérisation avant ou après le début de la polymérisation,
iii) Amorçage de la polymérisation par l'ajout d'un amorceur de polymérisation pour lancer la réaction et ajustement d'une température appropriée pour la décomposition de l'amorceur dans le réacteur,
iv) Réalisation de la réaction de polymérisation dans une première phase dans laquelle le mélange réactionnel présente une température qui correspond à une température égale ou inférieure au point d'ébullition de l'azéotrope de l'ester vinylique avec de l'eau et dans laquelle la concentration du monomère d'ester vinylique dans le mélange de polymérisation à la fin de la première phase n'a pas diminué de plus de 50 % par rapport à la concentration du monomère d'ester vinylique dans le mélange de polymérisation au début de la première phase,
v) Réalisation de la réaction de polymérisation dans une deuxième phase qui suit immédiatement la première phase et dans laquelle la température réactionnelle est supérieure au point d'ébullition de l'azéotrope de l'ester vinylique avec de l'eau, la concentration en monomère d'ester vinylique dans le mélange de polymérisation dans cette phase diminue par rapport à la concentration au point final de la première phase et la chaleur de la polymérisation est évacuée par évapocondensation à reflux ou bien un refroidissement combinant l'évacuation de la chaleur commandée par un dispositif de régulation de température et l'évapocondensation,
vi) Dosage du ou des monomères restants commençant au cours de la première phase de la polymérisation ou au plus tard au début de la deuxième phase et se terminant à la fin de la deuxième phase,
vii) Dosage d'un apport continu ou intermittent d'amorceur pendant la polymérisation, ledit apport ayant lieu à cheval sur les deux phases ou respectivement pendant une phase, et
viii) Appauvrissement du composé retardateur pendant la première phase.

2. Procédé selon la revendication 1, **caractérisé en ce que**, à l'étape i), on charge de 10 à 30 % en poids de la masse totale des monomères à polymériser.

3. Procédé selon l'une des revendications 1 à 2, **caractérisé en ce que**, à l'étape i), on charge la masse totale de l'émulsifiant et/ou du colloïde protecteur.

4. Procédé selon l'une des revendications 1 à 3, **caractérisé en ce que** la concentration en monomère d'ester vinylique dans le mélange de polymérisation est ≥ 7,5 % en poids, de façon particulièrement préférée ≥ 9 % en poids, pendant la durée de la première phase et **en ce que** la concentration en monomère d'ester vinylique dans le mélange de polymérisation est < 5 % en poids à la fin de la deuxième phase.

5. Procédé selon l'une des revendications 1 à 4, **caractérisé en ce que** les amorceurs de polymérisation utilisés sont des amorceurs de polymérisation solubles dans l'eau et/ou dans l'huile thermodégradables, de préférence un mélange d'amorceurs de polymérisation solubles dans l'eau et dans l'huile thermodégradables.

6. Procédé selon l'une des revendications 1 à 5, **caractérisé en ce que** le composé retardateur de polymérisation est choisi dans le groupe constitué par des composés nitro-aromatiques, des furanes, des composés vinyliques aromatiques, des composés allyliques, des acides dicarboxyliques insaturés, ainsi que par leurs anhydrides, leurs sels, leurs hémisels, leurs esters ou hémiesters avec des alcanols en C₁ à C₁₂ ou les sels de ces hémiesters.

7. Procédé selon la revendication 6, **caractérisé en ce que** le composé retardateur de polymérisation est choisi dans le groupe constitué par l'acide maléique, l'acide fumarique, le maléate de dibutyle, le maléate de monobutyle, l'anhydride maléique ou leurs anhydrides ou leurs sels ou hémisels.

8. Procédé selon l'une des revendications 1 à 7, **caractérisé en ce que** l'ester vinylique d'acide carboxylique utilisé est choisi parmi des esters vinyliques d'acides carboxyliques ayant de 1 à 18 atomes de carbone, en particulier des esters vinyliques d'acides carboxyliques ayant de 1 à 8 atomes de carbone, des esters vinyliques d'acides monocarboxyliques saturés ramifiés dont le reste acide contient 9, 10 ou 11 atomes de carbone, des esters vinyliques d'acides gras à chaîne longue saturés et insaturés, et/ou des esters vinyliques de l'acide benzoïque ou de l'acide p-*tert*.-butylbenzoïque.

9. Procédé selon la revendication 8, **caractérisé en ce que** l'ester vinylique d'acide carboxylique utilisé est l'acétate de vinyle.

10. Procédé selon l'une des revendications 1 à 9, **caractérisé en ce que** l'on utilise comme autres monomères éthyléniquement insaturés polymérisables avec l'ester vinylique d'acide carboxylique des hydrocarbures monoéthyléniquement insaturés et le cas échéant halogénés ayant de 2 à 4 atomes de carbone, de préférence l'éthylène.

11. Procédé selon l'une des revendications 1 à 10, **caractérisé en ce que** l'on utilise comme autres monomères éthyléniquement insaturés polymérisables avec l'ester vinylique d'acide carboxylique des anhydrides d'acides carboxyliques éthyléniquement insaturés.

12. Procédé selon la revendication 11, **caractérisé en ce que** l'anhydride d'acide carboxylique éthyléniquement insaturé utilisé est l'anhydride maléique.

13. Procédé selon la revendication 9, **caractérisé en ce que** la première phase de la polymérisation se fait à des températures dans la plage de 56 à 66 °C, de préférence dans la plage de 59 à 66 °C, en particulier dans la plage de 62 à 66 °C, les températures indiquées se rapportant à la pression normale.

14. Procédé selon la revendication 9, **caractérisé en ce que** la deuxième phase de la polymérisation se fait à des températures dans la plage de 50 à 95 °C, de préférence dans la plage de 62 à 90 °C, les températures indiquées se rapportant à la pression normale.

15. Procédé selon l'une des revendications 1 à 14, **caractérisé en ce que** l'alimentation des autres monomères commence pendant la première phase de polymérisation ou **en ce que** l'alimentation des autres monomères commence au début de la deuxième phase de polymérisation lors de l'élévation de la température interne.

16. Procédé selon la revendication 15, **caractérisé en ce que**, au début de l'alimentation des autres monomères, on choisit une vitesse d'alimentation inférieure qui augmente ensuite continuellement et qui est ajustée de telle façon que l'apport de monomère est le plus important lorsque la vitesse de la réaction atteint un maximum.

17. Procédé selon l'une des revendications 1 à 16, **caractérisé en ce que** les émulsifiants utilisés sont des émulsifiants anioniques et/ou non ioniques.

18. Procédé selon l'une des revendications 1 à 17, **caractérisé en ce que** le colloïde protecteur utilisé est l'alcool polyvinylique.
